# EUROPÄISCHE PATENTANMELDUNG

(11) **EP 3 184 387 A1**
(43) Veröffentlichungstag der Anmeldung: **28.06.2017**
(21) Anmeldenummer: 15202082.2
(22) Anmeldetag: 22.12.2015
(51) Int. Cl.: B60T 13/74, F16D 65/18, F16H 25/22

(54) **ELEKTROMECHANISCHE FESTSTELLBREMSE MIT KUGELGEWINDETRIEB UND KUGELRÜCKFÜHRUNG SOWIE DIE VERWENDUNG EINES KUGELGEWINDETRIEBS MIT KUGELRÜCKFÜHRUNG**

(71) Anmelder: CW Bearing GmbH, 22041 Hamburg (DE)
(72) Erfinder: Kiforiuk, Alexander, 73061 Ebersbach a. d. Fils (DE)
(74) Vertreter: Götz, Georg Alois

(57) **Zusammenfassung**

Verwendung eines Kugelgewindetriebs (1) mit einer Kugelrückführung (7) als rotatorisch-translatorisches Getriebe für eine elektromechanische Feststellbremse mit einem elektromechanischen Aktuator, welcher Kugelgewindetrieb (1) eine Kugelmutter (5) und eine Gewindespindel (3) umfasst, wobei die Kugelmutter (5) drehbar auf der Gewindespindel (3) gelagert ist und gemeinsam mit der Gewindespindel (3) einen schraubenartig gewundenen Kugelkanal (11) bildet, und welche Kugelrückführung (7) mindestens einen Rückführungskanal (702) zwischen einem Ende einer Windung (112) und einem Anfang einer Windung (111) des Kugelkanals (11) aufweist, um ein endloses Umlaufen der Kugeln (13) zu ermöglichen, wobei die Kugeln (13) zur Umwandlung einer rotatorischen Bewegung des elektromechanischen Aktuators in eine translatorische Bewegung zur Durchführung von Feststellbremsvorgängen, innerhalb des Kugelkanals (11) abwälzen und innerhalb des Rückführungskanals (702) rückgeführt werden.

## Beschreibung

Die Erfindung betrifft eine elektromechanische Feststellbremse, die zur Durchführung von Feststellbremsvorgängen einen elektromechanischen Aktuator, insbesondere einen Elektromotor, und einen Kugelgewindetrieb umfasst. Zur Umwandlung einer rotatorischen Bewegung des elektromechanischen Aktuators in eine translatorische Bewegung, weist der Kugelgewindetrieb eine Gewindespindel und eine Kugelmutter auf, wobei die Kugelmutter drehbar auf der Gewindespindel gelagert ist und gemeinsam mit der Gewindespindel einen schraubenartig gewundenen Kugelkanal zum Abwälzen von Kugeln bildet. Insbesondere betrifft die Erfindung eine elektromechanische Feststellbremse, die mit einer hydraulisch betätigbaren Betriebsbremse eines Kraftfahrzeugs kombiniert ist, wobei die Betriebsbremse zur Durchführung von Betriebsbremsungen einen Bremskolben aufweist. Die rotatorische Bewegung des elektromechanischen Aktuators ist mittels des Kugelgewindetriebs in eine translatorische Bewegung unwandelbar und auf den Bremskolben zur Durchführung von Feststellbremsvorgängen übertragbar. Die Erfindung betrifft ferner die Verwendung eines Kugelgewindetriebs mit einer Kugelrückführung als rotatorisch-translatorisches Getriebe für eine elektromechanische Feststellbremse, insbesondere als rotatorisch-translatorisches Getriebe für eine elektromechanische Feststellbremse, die mit einer hydraulisch betätigbaren Betriebsbremse eines Kraftfahrzeugs kombiniert ist.

Der Einsatz elektrischer Parkbremssysteme in Kraftfahrzeugen, bei denen die mechanisch zu betätigende Feststellbremse durch ein elektromechanisches System mit elektromotorischem Antrieb ersetzt wird ist bereits aus dem Stand der Technik bekannt. Zur Durchführung eines Bremsvorgangs wird die Rotationsbewegung des Elektromotors über einen Kugelgewindetrieb in eine translatorische Bewegung umgewandelt, wodurch die Bremsbeläge in Kontakt mit den Bremsflächen geraten. Zumeist ist ein solches elektrisches Parkbremssystem in den Bremssattel einer hydraulischen Betriebsbremse integriert, sodass dieser als Kombisattel die Bremsfunktionen der Betriebsbremse wie auch der Feststellbremse übernimmt. In dieser kombinierten Ausführung wird die Rotationsbewegung des Elektromotors mittels des Kugelgewindetriebs in eine translatorische Bewegung umgesetzt und zur axialen Verschiebung des Bremskolbens der hydraulischen Betriebsbremse genutzt.

Beispielsweise offenbart die DE 10 2013 216 327 A1 eine kombinierte Fahrzeugbremse die eine hydraulisch betätigbare Betriebsbremse und eine elektromechanisch betätigbare Feststellbremse aufweist. Letztere wird mittels eines elektromechanischen Aktuators angetrieben, dessen Rotationsbewegung an die Gewindespindel eines Kugelgewindetriebs übertragen wird. Über Wälzkörper, die innerhalb eines schraubenförmigen Gewindegangs zwischen Gewindespindel und Gewindemutter des Kugelgewindetriebs angeordnet sind, wird die Rotationsbewegung in eine Translationsbewegung der Gewindemutter umgesetzt. Zur Betätigung des Bremskolbens stützt sich die Gewindemutter an diesem ab. Innerhalb des Gewindegangs bilden zusätzliche Schraubenfederelemente mit den Walzkörpern eine ununterbrochene Feder-Kugelkette. Die Schraubenfederelemente erzeugen eine Vorspannung innerhalb der Feder-Kugelkette, wodurch der Gewindegang spielfrei befüllt ist.

Aus der DE 10 2009 051 123 A1 ist ebenfalls eine elektromechanische Feststellbremse mit Kugelgewindetrieb in Kombination mit einer hydraulischen Betriebsbremse bekannt. Hierin wird eine Vorspannung der Kugeln innerhalb eines schraubenförmigen Kugelkanals mittels zweier Wurmfedern, einer Vordruck- und einer Nachstellfeder erzeugt. Je nach Drehrichtung des Gewindetriebs gleiten die Kugeln entlang des Kugelkanals von einem axialen Ende der Gewindestange in Richtung des zweiten axialen Endes, wobei jeweils eine der Wurmfedern entlastet wird, während die andere komprimiert wird.

Im Fahrzeugbau werden Kugelgewindetriebe auch zur rotatorisch-translatorischen Umsetzung in elektromechanischen Servolenkungen verwendet. Insbesondere ist aus der DE 10 2008 059 745 A1 eine elektromechanische Servolenkung mit Kugelgewindetrieb bekannt. Anders als im elektrischen Parkbremssystem ist die Gewindespindel drehfest, aber axial verschiebbar gelagert, wohingegen die Kugelgewindemutter unter Einfluss eines Elektromotors im Betrieb rotiert. Folglich führt, je nach Drehrichtung der Kugelgewindemutter, die Kugelgewindespindel eine translatorische Bewegung nach links oder rechts aus.

Ein Kugelgewindetrieb für eine elektromechanische Lenkhilfe ist zum Beispiel aus der DE 10 2010 054 134 B3 bekannt. Der Kugelgewindetrieb weist einen Umlenkkörper auf, der einen Anfang einer Windung mit einem Ende einer Windung des Gewindegangs verbindet und derart eine Kugelrückführung zum endlosen Umlaufen der Kugeln ausbildet.

Eine Kugelkette für einen Kugelgewindetrieb mit Umlenkung bzw. Kugelrückführung für Hilfskraft unterstützte Lenkgetriebe von Kraftfahrzeugen, ist beispielsweise in der EP 1 573 231 B1 offenbart. Solche Kugelketten werden mit Federelementen und/oder Zwischenstücken zur möglichst spielfreien Lagerung der Kugeln in der Kugelkettenachse ausgeführt. Hierdurch soll ein Anschlagen der Kugeln in Umfangsrichtung vermieden werden, um beispielsweise unerwünschte Geräusche zu vermeiden.

Nachteilig an den eingangs geschilderten Kugelgewindetrieb-Ausführungen ist, dass die Federn und/oder Federelemente bzw. Zwischenstücke eine Vorspannung innerhalb der Kugelkette erzeugen, und so den Gleitanteil der Kugeln im Kugelkanal gegenüber dem Rollanteil deutlich erhöhen. Da die Reibungszahl bei Gleitreibung höher ist als bei Rollreibung führt dies zu erhöhter Abnutzung der Kugeln und der Gewindegänge sowie zu einem reduzierten Wirkungsgrad.

Aufgabe der vorliegenden Erfindung ist es, den Wirkungsgrad und die Lebensdauer einer elektromechanischen Feststellbremse, insbesondere in Kombination mit einer hydraulischen Betriebsbremse, zu optimieren und hierdurch Kosten zu senken. Ferner ist es Aufgabe der Erfindung neue Anwendungsgebiete für Kugelgewindetriebe mit Kugelrückführung zu erschließen.

Die Erfindungsaufgabe wird durch eine elektromechanische Feststellbremse gemäß Anspruch 1 und durch eine Verwendung eines Kugelgewindetriebs mit Kugelrückführung gemäß Anspruch 13 gelöst.

Eine erfindungsgemäße elektromechanische Feststellbremse der eingangs beschriebenen Art kennzeichnet sich durch einen Kugelgewindetrieb, der eine Kugelrückführung aufweist die mindestens einen Rückführungskanal zwischen einem Ende einer Windung und einem Anfang einer Windung des Kugelkanals zum Rückführen der Kugeln umfasst, wodurch ein endloses Umlaufen der Kugeln ermöglicht wird. Vorzugsweise wälzen die Kugeln innerhalb der Windungen des Kugelkanals ab und werden mittels der Kugelrückführung, die sich an ein Ende einer Windung des Kugelkanals anschließt zu einem Anfang einer Windung zurückgeführt. Insbesondere können einer oder mehrere Kugelkanäle axial zwischen einem beliebigen Anfang einer Windung und einem beliebigen Ende einer Windung angeordnet sein. Je nach Drehrichtung des elektromechanischen Aktuators laufen die Kugeln innerhalb des Kugelkanals von einem Anfang einer Windung zu einem Ende einer Windung und innerhalb des Rückführungskanals von einem Ende einer Windung zu einem Anfang einer Windung bzw. innerhalb des Kugelkanals von einem Ende einer Windung zu einem Anfang einer Windung und innerhalb des Rückführungskanals von einem Anfang einer Windung zu einem Ende einer Windung.

In einer vorteilhaften Ausführung der Erfindung ist die elektromechanische Feststellbremse mit einer hydraulisch betätigbaren Betriebsbremse eines Kraftfahrzeugs kombiniert. Die Betriebsbremse umfasst einen Bremskolben zur Durchführung von Betriebsbremsungen. Zur Durchführung eines Feststellbremsvorgangs ist die rotatorische Bewegung des elektromechanischen Aktuators mittels des Kugelgewindetriebs in eine translatorische Bewegung unwandelbar und auf den Bremskolben übertragbar. Aufgrund der kombinierten Nutzung von Bremssattel und Bremskolben können, neben Feststellbremsvorgängen, weitere Anwendungen mit der elektromechanischen Feststellbremse erfolgen. Beispielsweise kann diese als Anfahrtshilfe am Berg oder als Wegfahrsperre genutzt werden.

Vorzugsweise ist der mindestens eine Rückführungskanal radial zwischen der Kugelrückführung und der Gewindespindel angeordnet, sodass die Kugelrückführung gemeinsam mit der Gewindespindel den mindestens einen Rückführungskanal begrenzt. Die Kugelrückführung kann hierzu in eine Ausnehmung der Kugelmutter eingesetzt sein bzw. einen Abschnitt/Ausschnitt der Kugelmutter ersetzen. Zur Fixierung der Kugelrückführung mit dem Kugelgewindetrieb bzw. innerhalb der Kugelmutter erweist sich ein Federelement als vorteilhaft, welches die Kugelmutter, zumindest teilweise umgreifend und/oder umspannend angeordnet ist. Das Federelement ist zum Beispiel mittels einer Ringnut, die die äußere Umfangsfläche der Kugelmutter umläuft, gesichert.

Vorzugsweise sind die Kugeln innerhalb des Kugelkanals und innerhalb des Rückführungskanals des Kugelgewindetriebs oder zumindest in einem der Kanäle entlang und entgegen ihrer Bewegungsrichtung, also in etwa in Umfangs- bzw. Umlaufrichtung mit Spiel gelagert. Dies lässt sich insbesondere dadurch realisieren, dass auf die Verwendung von Federelementen oder anderen Zwischen- und/oder Endstücken verzichtet wird, die zur Erzeugung einer Vorspannung innerhalb des Kugelkanals bzw. des Rückführungskanals geeignet sind. Besonders vorteilhaft sind innerhalb des Kugelkanals und innerhalb des mindestens einen Rückführungskanals des Kugelgewindetriebs ausschließlich Kugeln angeordnet.

Gemäß einer vorteilhaften Weiterbildung der Erfindung sind die Kugeln innerhalb des Kugelkanals und/oder innerhalb des Rückführungskanals gruppenweise zu einer oder mehreren Kugelketten zusammengefasst, wobei eine Kugelkette mehrere Kugeln umfasst. Insbesondere sind die Kugeln einer Kugelkette einander berührend und mit einem Abstand zu den Kugeln einer jeweils benachbarten Kugelkette angeordnet. Vorteilhaft entspricht hierbei der Abstand zwischen zwei benachbarten Kugelketten mindestens der Länge einer Windung des Kugelkanals und/oder entspricht die Länge einer Kugelkette in etwa der Länge einer Windung des Kugelkanals.

Im Zusammenspiel mit der Kugelrückführung ergibt sich eine vorteilhafte Weiterbildung, bei der jeder Kugelkette genau ein Rückführungskanal zugeordnet ist und/oder zwischen jeder Kugelkette bezüglich der Bewegungsrichtung der Kugeln genau ein Rückführungskanal angeordnet ist. Hierdurch wird jede Kugelkette autonom innerhalb der jeweils zugeordneten Windungen des Kugelkanals und des jeweils zugeordneten Rückführungskanals endlos umlaufend geführt.

Alternativ zu den im Stand der Technik verwendeten Stahlkugeln kann sich der Einsatz von keramischen Kugeln, insbesondere von Kugeln aus Siliziumnitrid, als vorteilhaft erweisen. Keramikkugeln bzw. Siliziumnitridkugeln weisen eine hohe Dauerhaftigkeit und Leistungsfähigkeit auf, wodurch deren Verwendung verbesserte Konstruktionen von Kugelgewindetrieben ermöglicht. Beispielsweise sind Keramikkugeln bzw. Siliziumnitridkugeln Gegenüber Stahlkugeln leichter, härter, steifer, glatter und besitzen einen geringeren Wärmeausdehnungskoeffizienten als bspw. Lagerstahl. Ultraglatte Oberflächen und chemische Inertheit verhindern Kaltverschweißung und reduzieren gleichzeitig die Schmiermittelzersetzung, Roll- und Gleitreibung, sowie die Betriebstemperaturen. Der niedrige Wärmeausdehnungskoeffizient stabilisiert die Laufvorlast und ermöglicht damit höhere Geschwindigkeiten. Dadurch können die Standzeiten nahezu aller Anwendungen um ein vielfaches verlängert werden. Korrosionsbeständigkeit und elektrischer Widerstand eliminieren das Risiko von elektrischen Ladungsüberschlägen und gewährleisten Haltbarkeit unter rauen Betriebsbedingungen. Das geringere Gewicht verringert die Zentrifugalkraft, den Kugelschlupf, sowie die Reibung, wodurch selbst bei höheren Geschwindigkeiten und bei Mangelschmierung ein geringerer Temperaturanstieg resultiert.

Eine erfindungsgemäße Verwendung eines Kugelgewindetriebs mit Kugelrückführung sieht vor, diesen als rotatorisch-translatorisches Getriebe für eine elektromechanische Feststellbremse mit einem elektromechanischen Aktuator einzusetzen. Der Kugelgewindetrieb umfasst eine Kugelmutter und eine Gewindespindel, wobei die Kugelmutter drehbar auf der Gewindespindel gelagert ist und gemeinsam mit der Gewindespindel einen schraubenartig gewundenen Kugelkanal bildet. Die Kugelrückführung weist mindestens einen Rückführungskanal zwischen einem Ende einer Windung und einem Anfang einer Windung des Kugelkanals auf um ein endloses Umlaufen der Kugeln zu ermöglichen. Zur Umwandlung einer rotatorischen Bewegung des elektromechanischen Aktuators in eine translatorische Bewegung wälzen die Kugeln innerhalb des Kugelkanals ab und werden innerhalb des Rückführungskanals rückgeführt.

Insbesondere wird der Kugelgewindetrieb als rotatorisch-translatorisches Getriebe einer elektromechanischen Feststellbremse verwendet, die mit einer hydraulisch betätigbaren Betriebsbremse eines Kraftfahrzeugs kombiniert ist. Die Betriebsbremse umfasst einen Bremskolben, der zur Durchführung von Bremsvorgängen translatorisch bewegbar ist. Die rotatorische Bewegung des elektromechanischen Aktuators wird mittels des Kugelgewindetriebs in eine translatorische Bewegung umgewandelt und auf den Bremskolben zur Durchführung von Feststellbremsvorgängen übertragen.

Weitere Einzelheiten, Merkmale, Merkmals(unter) kombinationen, Vorteile und Wirkungen auf der Basis der Erfindung ergeben sich aus der nachfolgenden Beschreibung eines bevorzugten Ausführungsbeispiels der Erfindung und den Zeichnungen. Diese zeigen in:
- Figur 1: ein Ausführungsbeispiel eines Kugelgewindetriebs zur erfindungsgemäßen Verwendung bzw. für eine erfindungsgemäße elektromechanische Feststellbremse,
- Figur 2: eine Schnittdarstellung des Kugelgewindetriebs gemäß Figur 1 entlang der Linie B-B,
- Figur 3: eine perspektivische Darstellung des Kugelgewindetriebs gemäß Figur 1 mit angehobener Kugelrückführung,
- Figur 4: eine beispielhafte Ausführung von Rillenabschnitten einer Kugelrückführung zur Ausbildung von Rückführungskanälen.

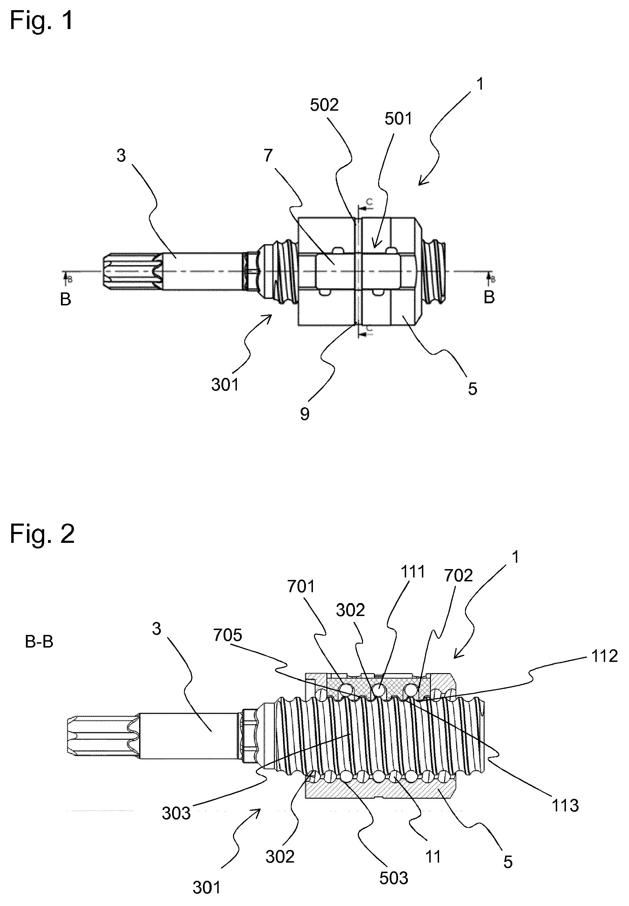

Figur 1 zeigt einen Kugelgewindetrieb 1, der zur erfindungsgemäßen Verwendung geeignet ist bzw. in eine erfindungsgemäße elektromechanische Feststellbremse einbaubar ist. Der Kugelgewindetrieb umfasst eine Gewindespindel 3 und eine Kugelmutter 5, die drehbeweglich auf dem Gewindeabschnitt 301 der Gewindespindel 3 gelagert ist. Die Gewindespindel 3 und die Kugelmutter 5 sind koaxial zueinander angeordnet. Zur Verwendung mit einer elektromechanischen Feststellbremse, deren übrige Bestandteile nicht in der Zeichnung dargestellt sind und die mit der hydraulischen Betriebsbremse eines Kraftfahrzeug kombiniert ist, ist der Kugelgewindetrieb 1 in bekannter Weise in den Bremszylinder der hydraulischen Betriebsbremse integriert. Hierbei ist ein Gleichstrom-Elektromotor über ein selbsthemmendes Untersetzungsgetriebe kraftschlüssig mit der Gewindespindel 3 verbunden. Die Kugelmutter 5 steht in kraftschlüssiger Verbindung mit dem Bremskolben bzw. stützt sich an diesem ab. Zur Durchführung eines Feststellbremsvorgangs treibt der Elektromotor die Gewindespindel 3 rotatorisch an. Die Rotationsbewegung wird mittels des Kugelgewindetriebs 1 in eine translatorische (Vorwärts)Bewegung der Kugelmutter 5 umgesetzt, wodurch der Bremskolben betätigt wird. Zum Lösen der elektromechanischen Feststellbremse treibt der Elektromotor die Gewindespindel 3 in entgegengesetzter Rotation an. Die Rotationsbewegung der Gewindespindel 3 wird in eine rückgerichtete, translatorische Bewegung der Kugelmutter 5 umgesetzt, wodurch der Bremskolben in seine Ausgangsposition zurückkehrt.

Der Kugelgewindetrieb 1 weist außerdem eine Kugelrückführung 7 (hier als Kugelrückführungskassette ausgebildet) auf, die formschlüssig in eine Ausnehmung 501 der Kugelmutter 5 eingesetzt ist. In etwa axial mittig ist am äußeren Durchmesser der Kugelmutter 5 eine Umlaufnut 502 angeordnet. Innerhalb der Umlaufnut 502 ist ein bandartiger, ringförmiger Federhalter 9 verspannbar, der die Kugelrückführung 7 innerhalb der Ausnehmung 501 fixiert.

Figur 2 zeigt eine Schnittdarstellung des Kugelgewindetriebs 1 aus Figur 1 entlang der Linie B-B. Die innere Umfangsfläche der Kugelmutter 5 ist mit einer schraubenartig gewundenen Kugelrille 503 versehen. Der Gewindeabschnitt 301 der Gewindespindel 3 weist eine schraubenartig um die Spindelachse gewundene Gewinderille 302 auf, die komplementär zur Kugelrille 503 verläuft, wodurch ein gemeinsamer, schraubenartig gewundener Kugelkanal 11 ausbildet ist. Wird die Gewindespindel 3 in Rotation versetzt, wälzen Kugeln 13 entlang der Gewinderille 302 und der Kugelrille 503 ab, wodurch die Kugelmutter 5 axial gegenüber der Gewindespindel 3 verlagert wird. Bezüglich der Gewinderille 302 bzw. der Kugelrille 503 erweist sich eine Geometrie, die zu einer geringen Anzahl an Kontaktpunkten zwischen den Kugeln 13 und dem Kugelkanal 11 führt, als vorteilhaft. Auf diese Weise ist die Reibung zwischen den Kugeln 13 und dem Kugelkanal 11 minimiert. Besonders vorteilhaft ist die Ausbildung von drei Kontaktpunkten, wodurch eine spielfreie Lagerung der Kugeln 13 innerhalb des Kugelkanals 11 in radialer Richtung realisierbar ist.

Die Kugelrückführung 7 fügt sich formschlüssig in die Ausnehmung 501 der Kugelmutter 5 ein. An einer inneren Umfangsfläche weist die Kugelrückführung 7 drei schraubenartig gewundene Rillenabschnitte 701 auf, deren Steigung entgegen der Steigung der Gewinderillen 302 gerichtet ist. Die Rillenabschnitte 701 schließen sich jeweils bündig an einen Anfang 111 und ein Ende 112 zweier benachbarter Windungen des Kugelkanals 11 an und überbrücken den dazwischen liegenden Gewindesteg 303. Mittels des so ausgebildeten Rückführungskanals 702 werden die Kugeln 13 über den Gewindesteg 303 der Gewinderillen 302 gehoben. Auf diese Weise wird ein endloses Umlaufen einer Kugel 13 innerhalb zweier benachbarter Windungen des Kugelkanals 11 und des dazwischen liegenden Rückführungskanals 702 ermöglicht.

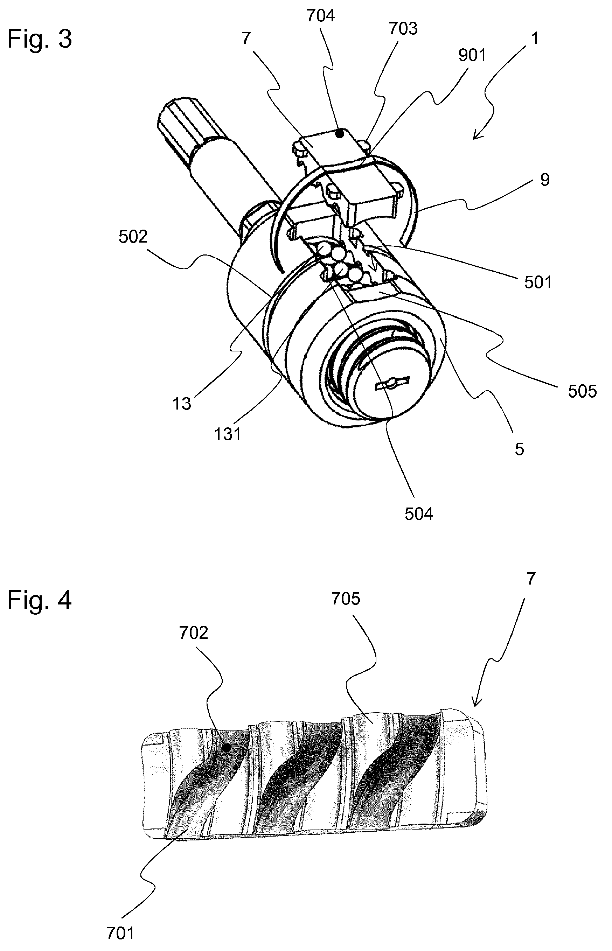

Figur 3 stellt den Kugelgewindetrieb 1 aus Figur 1 in einer perspektivischen Ansicht dar. Die Kugelrückführung 7 ist rein zur Anschauung oberhalb der Ausnehmung 501 der Kugelmutter 5 dargestellt. Ausgehend von den Längskanten der Kugelrückführung 7 erstrecken sich vier seitliche Vorsprünge 703, die zum formschlüssigen Eingriff mit vier, komplementär innerhalb der Ausnehmung 501 angeordneten Nuten 504 ausgebildet sind. Mithilfe des Federhalters 9 lassen sich die Kugelrückführung 7 und die Kugelmutter 5 miteinander verspannen. Der Federhalter 9 wird hierzu innerhalb der Umlaufnut 502 arretiert, und fixiert die Kugelrückführung 7 lösbar mit der Kugelmutter 5. Um die Anbringung des Federhalters 9 zu erleichtern, ist dieser als geöffneter Ring ausgebildet und erstreckt sich in etwa entlang zu 2/3 bis 3/4 entlang des Umfangs der Kugelmutter 5. Ein konkaver Abschnitt 901 des Federhalters 9 ist der eben verlaufenden Außenfläche 704 der Kugelrückführung 7 zugeordnet. Die eben verlaufende Außenfläche 704 bildet mit zwei flächig ausgestalteten Außenumfangsbereichen 505 eine Verdrehsicherung der Kugelmutter 5.

Innerhalb der Ausnehmung 501 sind Kugeln 13 zu drei Kugelketten 131 angeordnet. Die Kugeln 13 einer einzelnen Kugelkette 131 sind zueinander benachbart und einander berührend angeordnet. Zwischen den einzelnen Kugelketten 131 ist jeweils ein Abstand ausgebildet, der in etwa der Länge einer Windung des Kugelkanals 11 entspricht, sodass jede zweite Windung des Kugelkanals 11 mit einer Kugelkette 131 befüllt ist. Da keine zusätzlichen Elemente innerhalb des Kugelkanals angeordnet sind, sind die Kugeln 13 entlang ihrer Umlaufrichtung mit Spiel gelagert sind.

Figur 4 zeigt eine beispielhafte Ausgestaltung von Rillenabschnitten 701 zur Ausbildung von Rückführungskanälen 702 innerhalb einer Kugelrückführung 7. Die Kugelrückführung 7 ist schematisch als Kugelrückführungskassette dargestellt, die zum Einsetzen in eine Kugelmutter 5 insbesondere gemäß der Figuren 1 bis 3 geeignet ist. Die Innenfläche der Kugelrückführung 7 ist mit einem inneren Radius ausgebildet, der dem Innenradius der Kugelmutter 5 angepasst ist. Entlang der Innenfläche der Kugelrückführung verlaufen Innenrillen 705, die sich an die Kugelrillen 503 der Kugelmutter 5 fügen. Drei Rillenabschnitte 701 queren die Innenrillen 705 mit entgegen gerichteter Steigung und durchsetzen deren Gewindesteg. Durch Montage der Kugelrückführung 7 mit der Gewindespindel 3 entstehen drei Rückführungskanäle 702, die jeweils zwei einander benachbarte Windungen des Kugelkanals 11 miteinander verbinden. Der Betrag der Steigung eines Rückführungskanals 702 hängt von dessen Länge ab. Vorzugsweise weist der Rückführungskanal 702 bzw. ein Rillenabschnitt 701 einen höheren Steigungsbetrag auf als der Kugelkanal 11 bzw. die Rillen 705, wodurch unter anderem eine kurze Verweilzeit der Kugeln 13 innerhalb des Rückführungskanals 702 realisierbar ist.

### Bezugszeichenliste:

- 1: Kugelgewindetrieb
- 3: Gewindespindel
- 301: Gewindeabschnitt
- 302: Gewinderille
- 303: Gewindesteg
- 5: Kugelmutter
- 501: Ausnehmung
- 502: Umlaufnut
- 503: Kugelrille
- 504: Nut
- 7: Kugelrückführung
- 701: Rillenabschnitt
- 702: Rückführungskanal
- 703: Vorsprung
- 704: Außenfläche
- 705: Innenrillen
- 9: Federhalter
- 901: Konkaver Abschnitt
- 11: Kugelkanal
- 111: Anfang einer Windung
- 112: Ende einer Windung
- 13: Kugel
- 131: Kugelkette

## Patentansprüche

1. Elektromechanische Feststellbremse, umfassend einen elektromechanischen Aktuator und einen Kugelgewindetrieb (1), der zur Umwandlung einer rotatorischen Bewegung des elektromechanischen Aktuators in eine translatorische Bewegung eine Kugelmutter (5) und eine Gewindespindel (3) umfasst, wobei die Kugelmutter (5) drehbar auf der Gewindespindel (3) gelagert ist und gemeinsam mit der Gewindespindel (3) einen schraubenartig gewundenen Kugelkanal (11) zum Abwälzen von Kugeln (13) bildet, **dadurch gekennzeichnet, dass** der Kugelgewindetrieb (1) eine Kugelrückführung (7) aufweist, die mindestens einen Rückführungskanal (702) zwischen einem Ende einer Windung (112) und einem Anfang einer Windung (111) des Kugelkanals (11) zum Rückführen der Kugeln (13) umfasst, um ein endloses Umlaufen der Kugeln (13) zu ermöglichen.

2. Elektromechanische Feststellbremse nach Anspruch 1, **dadurch gekennzeichnet, dass** die Feststellbremse mit einer hydraulisch betätigbaren Betriebsbremse eines Kraftfahrzeugs kombiniert ist, die einen Bremskolben zur Durchführung von Betriebsbremsungen umfasst, wobei die rotatorische Bewegung des elektromechanischen Aktuators mittels des Kugelgewindetriebs (1) in eine translatorische Bewegung umwandelbar und zur Durchführung von Feststellbremsvorgängen auf den Bremskolben übertragbar ist.

3. Elektromechanische Feststellbremse nach einem der vorhergehenden Ansprüche, **dadurch gekennzeichnet, dass** der mindestens eine Rückführungskanal (11) radial zwischen der Kugelrückführung (7) und der Gewindespindel (3) angeordnet ist, wobei die Kugelrückführung (7) und die Gewindespindel (3) den mindestens einen Kugelkanal (11) begrenzen.

4. Elektromechanische Feststellbremse nach einem der vorhergehenden Ansprüche, **gekennzeichnet durch** einen Federhalter (9), der zur Fixierung der Kugelrückführung (7) mit dem Kugelgewindetrieb (1) ausgebildet ist.

5. Elektromechanische Feststellbremse nach einem der vorhergehenden Ansprüche, **dadurch gekennzeichnet, dass** die Kugeln (13) innerhalb des Kugelkanals (11) und innerhalb des Rückführungskanals (702) in Umlaufrichtung mit Spiel gelagert sind.

6. Elektromechanische Feststellbremse nach einem der vorhergehenden Ansprüche, **dadurch gekennzeichnet, dass** die Kugeln (13) innerhalb des Kugelkanals (11) und/oder innerhalb des Rückführungskanals (702) des Kugelgewindetriebs gruppenweise zu einer oder mehreren Kugelketten (131) angeordnet sind, wobei eine Kugelkette (131) mehrere Kugeln (13) umfasst.

7. Elektromechanische Feststellbremse nach Anspruch 6, **dadurch gekennzeichnet, dass** die Kugeln (13) einer Kugelkette (131) einander berührend und mit einem Abstand zu jeweils benachbarten Kugelketten (13) angeordnet sind.

8. Elektromechanische Feststellbremse nach einem der Ansprüche 6 oder 7, **dadurch gekennzeichnet, dass** der Abstand zwischen zwei benachbarten Kugelketten (131) mindestens der Länge einer Windung des Kugelkanals (11) des Kugelgewindetriebs (1) entspricht.

9. Elektromechanische Feststellbremse nach einem der Ansprüche 6 bis 8, **dadurch gekennzeichnet, dass** die Länge einer Kugelkette (131) in etwa der Länge einer Windung des Kugelkanals (11) des Kugelgewindetriebs (1) entspricht.

10. Elektromechanische Feststellbremse nach einem der Ansprüche 6 bis 9, **dadurch gekennzeichnet, dass** jeder Kugelkette (131) genau ein Rückführungskanal (702) zugeordnet ist und/oder, dass zwischen zwei einander benachbarten Kugelketten (131) genau ein Rückführungskanal (702) angeordnet ist.

11. Elektromechanische Feststellbremse nach einem der vorhergehenden Ansprüche, **dadurch gekennzeichnet, dass** die Kugeln (13) ein keramisches Material umfassen.

12. Elektromechanische Feststellbremse nach einem der vorhergehenden Ansprüche, **dadurch gekennzeichnet, dass** die Kugeln (13) aus Siliziumnitrid gefertigt sind.

13. Verwendung eines Kugelgewindetriebs (1) mit einer Kugelrückführung (7) als Getriebe für eine elektromechanische Feststellbremse mit einem elektromechanischen Aktuator, welcher Kugelgewindetrieb (1) eine Kugelmutter (5) und eine Gewindespindel (3) umfasst, wobei die Kugelmutter (5) drehbar auf der Gewindespindel (3) gelagert ist und gemeinsam mit der Gewindespindel (3) einen schraubenartig gewundenen Kugelkanal (11) bildet, und welche Kugelrückführung (7) mindestens einen Rückführungskanal (702) zwischen einem Ende einer Windung (112) und einem Anfang einer Windung (111) des Kugelkanals (11) aufweist, um ein endloses Umlaufen der Kugeln (13) zu ermöglichen, wobei die Kugeln (13) zur Umwandlung einer rotatorischen Bewegung zur Durchführung von Feststellbremsvorgängen, innerhalb des Kugelkanals (11) abwälzen und innerhalb des Rückführungskanals (702) rückgeführt werden.

14. Verwendung nach Anspruch 13, **dadurch gekennzeichnet, dass** die elektromechanische Feststellbremse mit einer hydraulisch betätigbaren Betriebsbremse eines Kraftfahrzeugs kombiniert ist, wobei die Betriebsbremse einen Bremskolben zur Durchführung von Bremsvorgängen umfasst, und die rotatorische Bewegung des elektromechanischen Aktuators mittels des Kugelgewindetriebs (1) in eine translatorische Bewegung umgewandelt und auf den Bremskolben zur Durchführung von Feststellbremsvorgängen übertragen wird.

15. Verwendung nach einem der Ansprüche 13 oder 14 **dadurch gekennzeichnet, dass** der Kugelgewindetrieb (1) eines oder mehrere Merkmale gemäß der Ansprüche 3 - 12 aufweist.
